# EUROPEAN PATENT APPLICATION

(11) **EP 3 674 902 A1**
(43) Date of publication of application: **01.07.2020**
(21) Application number: 18290149.6
(22) Date of filing: 26.12.2018
(51) Int. Cl.: G06F 11/10

(54) **A MEMORY SYSTEM**

(71) Applicant: Robert Bosch GmbH, 70442 Stuttgart (DE)
(72) Inventor: Velardi, Jérone, 06100 Nice (FR); Montalbano, Giuseppe, 06270 Villeneuve Loubet (FR); Eychenne, Christophe, 83600 Les Adrets de l'Esterel (FR)
(74) Representative: Cabinet HERRBURGER

(57) **Abstract**

The present invention refers to a memory system (100) comprises a functional bus interface with a plurality of bit masks (101), a bit mask processing module (102) coupled with the functional bus with the plurality of bit masks (101), configured to process data and corresponding parity bits on the basis of each of the plurality of bit masks, a multiplexing module (103) coupled with the bit mask processing module (102), configured to multiplex the data and the corresponding parity bits after being processed by the bit mask processing module (102), and a memory (104) comprising at least two physical memory instances coupled with the multiplexing module (103).

## Description

### Field of the Invention

The present invention relates to a memory system, particularly to methods and apparatuses for end-to-end error detection and correction codes (ECC) memory protection

### Technological Background

Systems based on Integrated circuits electronic devices, also referred to as systems-on-chip (SoC), often make a large use of volatile and non-volatile embedded memories (e.g., synchronous-random-access-memory (SRAM) and read-only-memory (ROM) respectively).

Within a SoC data are transferred through specific data-bus interconnect systems. A memory consists of an array of storage elements, denoted bit-cell array which is oftentimes connected to a data-bus through an address decoding digital logic. When the memory is accessed through a data read or write transaction the address decoding logic translates the "logic" data address at the data bus interface into the corresponding "physical" address internal to the memory to physically write into or read from the desired row of the memory bit-cell array.

Thus, when accessing a memory, data can be corrupted due to faults in either the address decoding logic or faults in the bit-cell array. Faults in the address decoding logic will make data to be read from or written to the wrong memory bit-cell array row. Faults in the memory bit-cell array will corrupt the corresponding data information bits.

In certain applications, e.g., safety critical applications, those memories need suited error protection mechanisms to prevent system failure due to data corruption. Error detection codes (EDC) are commonly used to detect and correct errors in memories bit-cell arrays. Information data bits are encoded prior to writing into the memory and decoded when read from the memory.

Data bits encoding comprises computing and adding "parity" bits to the information data bits. Both "data" and "parity" bits are then stored (i.e., written) into the memory bit-cell array. When reading from the memory, both data and parity bits are read and decoded to detect the presence of errors.

Error detection and correction codes (ECC) can be adopted to also support both error detection and correction.

Simply encoding and decoding while writing to and reading from memory respectively provide error detection against faults in the memory bit-cell array (i.e., in the storage elements), but it generally provides no error detection means against faults in the address decoder logic. Indeed, the data information and the corresponding parity bits will be just written to and/or read from the wrong address, i.e., the wrong bit-cell array row.

A well-known technique to support an address decoding error detection consists of storing data information bits and the corresponding parity bits at different row-addresses. That approach has several drawbacks though:
First, it requires multiple memory accesses, i.e., two accesses for each read and each write transaction, therefore doubling the required memory access bandwidth with repercussions on power consumption, performances and design complexity.

Second, it requires an increased memory storage capacity and, in practice hard to optimize, given the different word sizes of information data bits and parity bits. Third, the error detection coverage can be limited by permanent faults in the address decoder logic that will generate the same faulty address when reading and when writing.

### Summary of Invention

It is thus an object of the present invention to overcome or reduce at least some of the drawbacks of the prior art and to provide a more effective solution comprising splitting the information and parity bits into two or more physically distinct memories. That approach overcomes the drawbacks described above at the expense of a slightly larger memory area footprint. Exemplarily, the two or more memory instances can be chosen in order to effectively exploit the available memory capacity across information data and parity bits with virtually no impact on the access bandwidth. Moreover, the presence of two address decoders (one per each memory instance) increases the error detection probability also for faults in the address decoder logic. The solution requires to be specially tailored to each data and memory sizes and formats though, requiring to design specific logic to interface the data-bus to the memory (e.g., when write-bit masking is used).

The two or more physical memory instances preferably have the same access timing characteristics in order not to impact the overall performance.

According to an aspect of the present invention, a memory system is provided. The memory system comprises a functional bus interface with a plurality of bit masks, a bit mask processing module coupled with the functional bus with the plurality of bit masks configured to process data and corresponding parity bits on the basis of each of the plurality of bit masks. Furthermore, the memory system comprises a multiplexing module coupled with the bit mask processing module, configured to multiplex the data and the corresponding parity bits after being processed by the bit mask processing module and a memory comprising at least two physical memory instances coupled with the multiplexing module. The multiplexing module is configured to multiplex the data and the corresponding parity bits after being processed by the bit mask processing module, by dividing each data into a plurality of portions, and dividing the corresponding parity bits into portions corresponding to the plurality of portions of the data, and storing the plurality of portions of the data and corresponding portions of the corresponding parity bits in different physical memory instances of the memory.

Thereby, a more effective solution for a memory system comprising splitting the information and parity bits into two or more physically distinct memories can be provided.

Preferably, the bit mask processing module further comprises a plurality of bit mask buses coupled with the functional bus interface with a plurality of bit masks, a plurality of EDC codecs coupled with the plurality of bit mask buses respectively, and a plurality of bit mask memories coupled between the plurality of EDC codecs and the multiplexing module. The number of the plurality of bit mask buses, the number of the plurality of EDC codecs, and the number of the plurality of bit mask memories are the same and correspond to the number of the plurality of bit masks. Thereby, the same number of correlating components can be provided for the bit mask processing module so that they can interact with each other within the module.

In a preferred embodiment the bit mask processing module further comprises an error control module coupled with each of the plurality of EDC codecs. Each of the plurality of EDC codecs is configured to signal the presence of a decoding error by asserting an error signal and transmit the error signals to the error control module. Thereby, the bit mask processing module can be provided with an error control function.

Preferably, the multiplexing module further comprises at least two multiplexers, the at least two multiplexers comprise a first multiplexer configured to multiplex the plurality of the data and the corresponding parity bits after being processed by the bit mask processing module, and a second multiplexer configured to organize the plurality of the data and the corresponding parity bits after being multiplexed by the first multiplexer as a plurality of groups each comprising a portion of each data and a portion of the parity bits corresponding to another portion of the data and store the plurality of groups of data and parity bits in a plurality of memory instances respectively. Thereby, the multiplexing module can be provided to cooperate with the bit mask processing module and the plurality of memory instances to organize a plurality of groups of data and parity bits into a plurality of memory instances respectively.

In a preferred embodiment the second multiplexer is further configured to organize the plurality of the data and the corresponding parity bits multiplexed by the first multiplexer in lower and upper half-words, and store the lower half words of the plurality of the data and the upper half words of the plurality of parity bits in a first memory instance, and store the upper half words of the plurality of the data and the lower half words of the plurality of parity bits in a second memory instance. Thereby, a second multiplexer can be provided to further facilitate organizing a plurality of groups of data and parity bits into a plurality of memory instances respectively.

Preferably, a complete data word is split in an upper and a lower part as follows: data_L = data[(NW-(NW mod 2))/2-1:0] and data_U = data[NW-1: (NW-(NW mod 2))/2]; and for the parity bits par_L = par[(NP-(NP mod 2))/2-1:0] and par_U = par[NP-1 : (NP-(NP mod 2))/2], wherein the notations (NW mod 2) and (NP mod 2) denote the reminders of the divisions of NW/2 and NP/2 respectively. Thereby, a rule for splitting a data word can be advantageously provided.

In a preferred embodiment each physical memory instance comprises a read/write data bus, a control module, an address decoder and a memory array. Thereby, each physical memory instance can be provided with required functions.

According to another aspect of the present invention, it is provided a method comprising the following steps: communicating data between a functional bus interface with a plurality of bit masks and a bit mask processing module coupled with the functional bus interface with the plurality of bit masks. Processing by the bit mask processing module, the data and corresponding parity bits on the basis of each of the plurality of bit masks. Multiplexing by a multiplexing module coupled with the bit mask processing module, the data and the corresponding parity bits after being processed by the bit mask processing module, wherein each data is divided into a plurality of portions, and the corresponding parity bits are divided into portions corresponding to the plurality of portions of the data. Furthermore, the method comprises the step of storing the plurality of portions of the data and corresponding portions of the corresponding parity bits in different physical memory instances of the memory. Thereby, a more effective solution for a memory system comprising splitting the information and parity bits into two or more physically distinct memories can be provided.

In a preferred embodiment the method further comprises signaling by each of plurality of EDC codecs comprised in the bit mask processing module presence of a decoding error by asserting an error signal, and transmitting by each of the plurality of EDC codecs the error signal to a error control module comprised in the bit mask processing module. Thereby, an error control function can be provided to the bit mask processing module.

Preferably the multiplexing step further comprises multiplexing the plurality of the data and the corresponding parity bits after being processed by the bit mask processing module by using a first multiplexer comprised in the multiplexing module, organizing by a second multiplexer comprised in the multiplexing module the plurality of the data and the corresponding parity bits after being multiplexed by the first multiplexer as a plurality of groups each comprising a portion of each data and a portion of the parity bits corresponding to another portion of the data, and the storing step further comprises storing by the second multiplexer the plurality of groups of data and parity bits in a plurality of memory instances respectively. Thereby, a plurality of groups of data and parity bits can be organized into a plurality of memory instances respectively.

In a preferred embodiment the method further comprises organizing by the second multiplexer the plurality of the data and the corresponding parity bits after being multiplexed by the first multiplexer in lower and upper half-words, and storing the lower half words of the plurality of the data and the upper half words of the plurality of parity bits in a first memory instance of the memory, and storing the upper half words of the plurality of the data and the lower half words of the plurality of parity bits in a second memory instance of the memory. Thereby, a second multiplexer can be used to further facilitate organizing a plurality of groups of data and parity bits into a plurality of memory instances respectively.

Preferably the method further comprises splitting a complete data word in an upper and a lower part as follows: data_L = data[(NW-(NW mod 2))/2-1:0] and data_U = data[NW-1: (NW-(NW mod 2))/2]; and for the parity bits par_L = par[(NP-(NP mod 2))/2-1:0] and par_U = par[NP-1 : (NP-(NP mod 2))/2], wherein the notations (NW mod 2) and (NP mod 2) denote the reminders of the divisions of NW/2 and NP/2 respectively. Thereby, a rule for splitting a data word can be provided.

According to a further aspect of the invention, a computing apparatus is provided. The computing apparatus comprising: a processor and a memory system according to the present invention coupled with the processor. Thereby, a computing apparatus comprising the memory system according to the present invention is provided.

Preferably, the computing apparatus comprises a hard disk and/or Input/Output I/O devices. Thereby, the computing apparatus can be provided with other required components.

Preferably, the computing apparatus is selected from a group comprising a Personal Computer PC, a desktop computer, a mobile computer, a laptop computer, a notebook computer, a tablet computer, a server computer, a handheld computer, a handheld device, a Personal Digital Assistant PDA device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point AP, a wired or wireless router, a wired or wireless modem, a video device, an audio device, an audio-video A/V device, a Set-Top-Box STB, a Blu-ray disc BD player, a BD recorder, a Digital Video Disc DVD player, a High Definition HD DVD player, a DVD recorder, a HD DVD recorder, a Personal Video Recorder PVR, a broadcast HD receiver, a video source, an audio source, a video sink, an audio sink, a stereo tuner, a broadcast radio receiver, a flat panel display, a Personal Media Player PMP, a digital video camera DVC, a digital audio player, a speaker, an audio receiver, an audio amplifier, a gaming device, a data source, a data sink, a Digital Still camera DSC, a wired or wireless network, a wireless area network, a Wireless Video Area Network WVAN, a Local Area Network LAN, a Wireless LAN WLAN, a Wireless Metropolitan Area Network WMAN communication system, a Personal Area Network PAN, a Wireless PAN WPAN. Thereby, some examples for the computing apparatus are listed.

The solution of the present invention allows to support error detection (correction) encoding-decoding. That architecture of the solution inherently supports write-bit masking and evenly split the information data and parity bits pay-load across two or more identical physical memory instances, therefore preventing potential performance issues.

In practice, the error detection mechanism described herein provides end-to-end protection, by encoding and decoding information data and parity bits at the memory-to-data-bus interface in order to protect not only the memory stored content but also the write and read transactions between the data-bus and the memory. As such, the solution of the present invention is a true end-to-end protection mechanism.

The end-to-end EDC (ECC) memory protection mechanism supports: end-to-end protection between the data-bus and the internal RAM bit cells any form of EDC/ECC encoding/decoding based on fully asynchronous logic, e.g.: single-bit parity, Hamming double-error-detection, CRC, Reed-Solomon, BCH codes etc.

Memory address decoding logic protection multiple data-bus bit masking support via EDC/ECC encoding/decoding per bit mask (the same bit mask shall be used for writing and reading).

Further aspects of the present invention could be learned from the dependent claims or the following description.

### Brief Description of the Drawings

Features will become apparent to those of ordinary skill in the art by describing in detail exemplary embodiments with reference to the attached drawings in which:
Fig. 1 shows a general functional block diagram of a memory system according to an embodiment of the present invention,
Fig. 2 shows a specific functional block diagram of a memory system according to an embodiment of the present invention;
Fig. 3 shows a particular embodiment of the functional block diagram of the memory system according to Figs. 1 and 2, wherein N bit masks are arranged;
Fig. 4 is a flow diagram of a method 400 according to an embodiment of the present invention; and
Fig. 5 shows a computing apparatus comprising the memory system according to some embodiments of the present invention.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items. Further, the use of "may" when describing embodiments of the present invention refers to "one or more embodiments of the present invention."

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention.

In the following description of embodiments of the present invention, the terms of a singular form may include plural forms unless the context clearly indicates otherwise.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

Features of the inventive concept and methods of accomplishing the same may be understood more readily by reference to the following detailed description of embodiments and the accompanying drawings. Hereinafter, example embodiments will be described in more detail with reference to the accompanying drawings, in which like reference numbers refer to like elements throughout. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art. Accordingly, processes, elements, and techniques that are not necessary to those having ordinary skill in the art for a complete understanding of the aspects and features of the present invention may not be described. Unless otherwise noted, like reference numerals denote like elements throughout the attached drawings and the written description, and thus, descriptions thereof will not be repeated. In the drawings, the relative sizes of elements, layers, and regions may be exaggerated for clarity.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present invention.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

It will be understood that when an element or layer is referred to as being "on," "connected to," or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "comprises," "comprising," "includes," and "including," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value. Further, the use of "may" when describing embodiments of the present invention refers to "one or more embodiments of the present invention." Herein, the terms "upper" and "lower" are defined according to the z-axis. For example, the cover is positioned at the upper part of the z-axis, whereas the ground plate is positioned at the lower part thereof.

The electronic or electric devices and/or any other relevant devices or components according to embodiments of the present invention described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the exemplary embodiments of the present invention.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

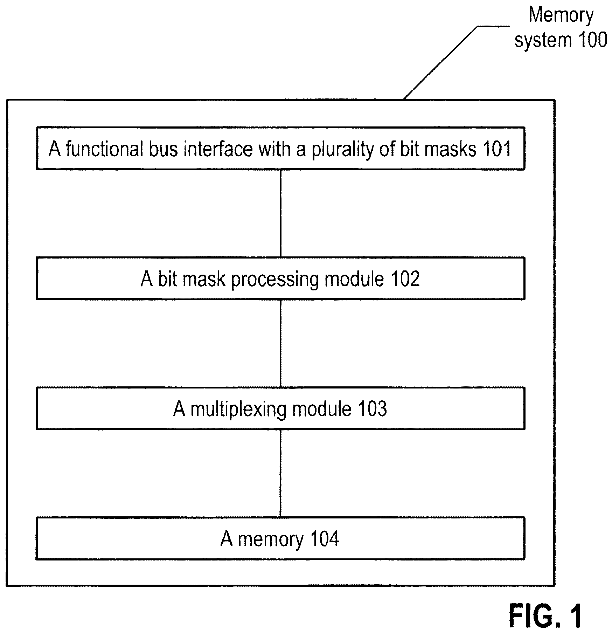

Fig. 1 shows a general functional block diagram of a memory system according to an embodiment of the present invention.

As shown in Fig. 1, a memory system 100 is shown which comprises a functional bus interface with a plurality of bit masks 101, a bit mask processing module 102 coupled with the functional bus with the plurality of bit masks 101 configured to process data and corresponding parity bits on the basis of each of the plurality of bit masks, a multiplexing module 103 coupled with the bit mask processing module 102 configured to multiplex the data and the corresponding parity bits after being processed by the bit mask processing module 102, and a memory 104 comprising at least two physical memory instances coupled with the multiplexing module 103, wherein the multiplexing module 103 is configured to multiplex the data and the corresponding parity bits after being processed by the bit mask processing module 102, by dividing each data into a plurality of portions, and dividing the corresponding parity bits into portions corresponding to the plurality of portions of the data, and storing the plurality of portions of the data and corresponding portions of the corresponding parity bits in different physical memory instances of the memory 104.

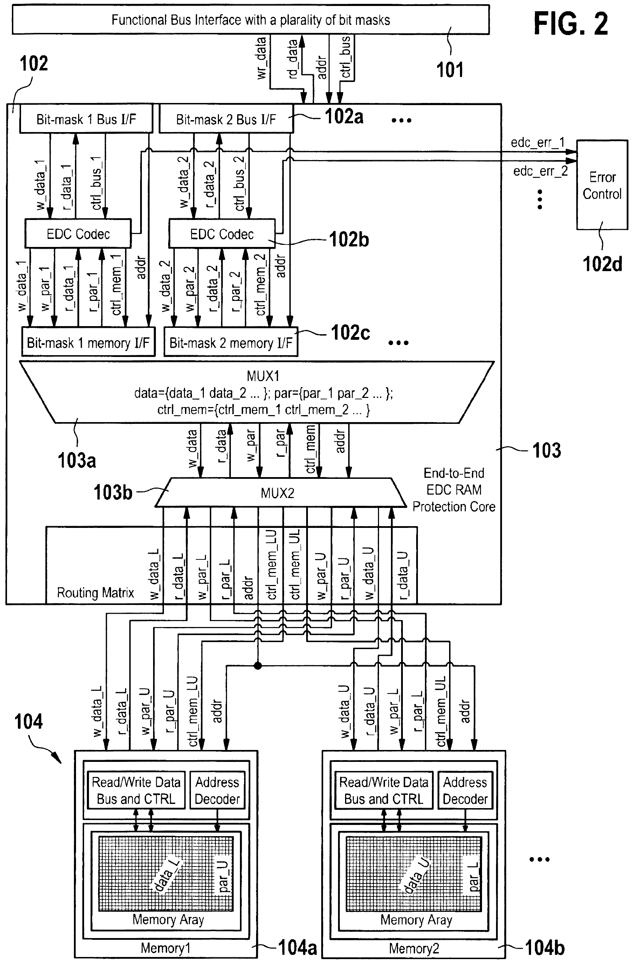

Fig. 2 shows a specific functional block diagram of a memory system according to an embodiment of the present invention.

As shown in Fig. 2, the bit mask processing module 102 may comprise a plurality of bit mask buses 102a coupled with the functional bus interface with a plurality of bit masks 101, a plurality of EDC codecs 102b coupled with the plurality of bit mask buses 102a respectively, and a plurality of bit mask memories (e.g., RAMs) 102c coupled between the plurality of EDC codecs 102b and the multiplexing module 103. The number of the plurality of bit mask buses 102a, the number of the plurality of EDC codecs 102b, and the number of the plurality of bit mask memories 102c may be the same and correspond to the number of the plurality of bit masks.

As shown in Fig. 2, the bit mask processing module 102 may further comprise an error control module 102d coupled with each of the plurality of EDC codecs 102b. Each of the plurality of EDC codecs 102b may be configured to signal the presence of a decoding error by asserting an error signal. The error signals can be transmitted to the error control module 102d.

As shown in Fig. 2, the multiplexing module 103 may comprise at least two multiplexers. The at least two multiplexers may comprise a first multiplexer 103a configured to multiplex the plurality of the data and the corresponding parity bits after being processed by the bit mask processing module 102, and a second multiplexer 103b configured to organize the plurality of the data and the corresponding parity bits after being multiplexed by the first multiplexer 103a as a plurality of groups each comprising a portion of each data and a portion of the parity bits corresponding to another portion of the data and store the plurality of groups of data and parity bits in a plurality of memory instances respectively. Exemplarily, the second multiplexer 103b may be configured to organize the plurality of the data and the corresponding parity bits multiplexed by the first multiplexer 103a in lower and upper half-words, and store the lower half words of the plurality of the data and the upper half words of the plurality of parity bits in a first memory instance 104a, and store the upper half words of the plurality of the data and the lower half words of the plurality of parity bits in a second memory instance 104b.

As shown in Fig. 2, the memory 104 comprises at least two physical memory instances coupled with the multiplexing module 103. The at least two physical memory instances may comprises the first memory instance 104a and the second memory instance 104b. Each physical memory instance may comprise a read/write data bus and control module, an address decoder and a memory array.

Referring to Fig. 2, a data bus for communicating data and parity bits, an address bus for communicating address signals, a control bus for communicating control signals may be arranged between the modules 101-104, and may further be arranged between the submodules of the relevant modules, e.g., the plurality of bit mask buses 102a, the plurality of EDC codecs 102b and the plurality of bit mask memories 102c of the bit mask processing module 102; the first multiplexer 103a and the second multiplexer 103b of the multiplexing module 103.

Exemplarily, data may be communicated between the functional bus interface with a plurality of bit masks 101 and the bit mask processing module 102 via a data bus, address signals and control signals may be transmitted from the functional bus interface with a plurality of bit masks 101 to the bit mask processing module 102 via an address bus and a control bus respectively. Data may be communicated between a bit mask bus 102a and the corresponding EDC codec 102b via a data bus, control signals may be transmitted from a bit mask bus 102a to the corresponding EDC codec 102b via a control bus. Data and parity bits may be communicated between an EDC codec 102b and the corresponding bit mask memory 102c, control signals may be transmitted from an EDC codec 102b to the corresponding bit mask memory 102c via a control bus. Addresses may be transmitted from a bit mask bus 102a and the corresponding bit mask memory 102c via an address bus. Data and parity bits may be communicated between the bit mask processing module 102 and the multiplexing module 103 via a data bus, address signals and control signals may be transmitted from the bit mask processing module 102 to the multiplexing module 103 via an address bus and a control bus respectively. Data and parity bits may be communicated between the first multiplexer 103a and the second multiplexer 103b via a data bus, address signals and control signals may be transmitted from the first multiplexer 103a to the second multiplexer 103b via an address bus and a control bus respectively. Data and parity bits may be communicated between the multiplexing module 103 and the memory 104 via a data bus, address signals and control signals may be transmitted from the multiplexing module 103 to the memory 104 via an address bus and a control bus respectively.

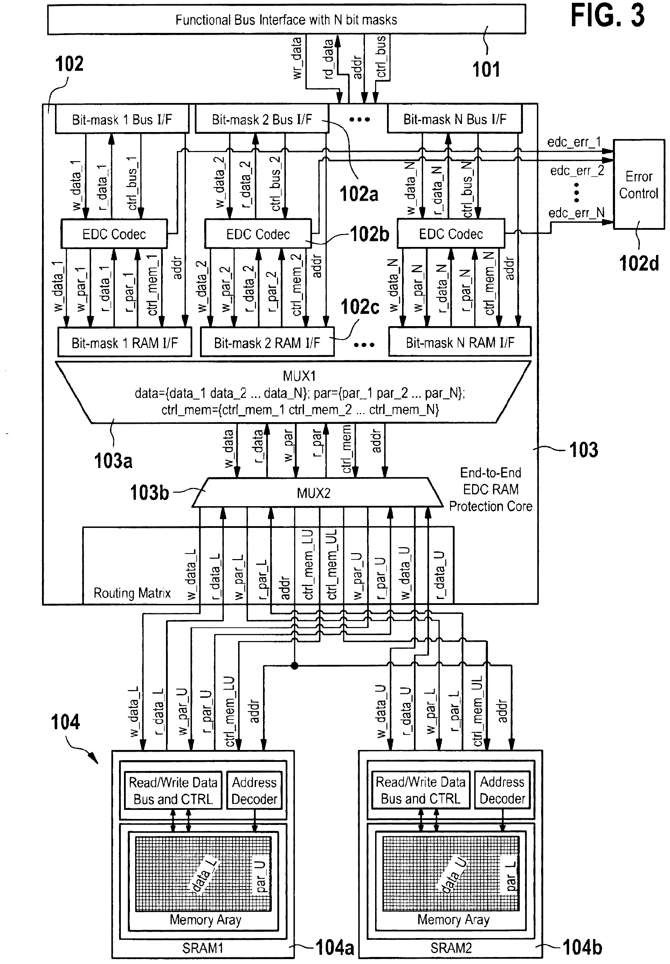

Fig. 3 shows a particular embodiment of the functional block diagram of Figs. 1 and 2, wherein N bit masks are arranged. According to the embodiment of Fig. 3, N is the number of bit masks, W is the word bit-width per bit mask, M=N×W is the total data bus bit-width, P is the number of parity bits generated by the EDC encoding per bit masked data word, Q=N×P is the total number of parity bits, "data" denotes all the N×W data bits word, and "r_data" and "w_data" denote the read and written data respectively, "w_data_1", ..., "w_data_N" ("r_data_1", ..., "r_data_N"), denote the bit masked written (read) data word for bit mask 1, 2, ..., N respectively, "w_par_1", ..., "w_par_N" ("r_par_1", ..., "r_par_N") denote the written/encoded (read/to-be-decoded) EDC parity bits word corresponding to the bit masked words "w_data_1", ..., "w_data_N" ("r_data_1", ..., "r_data_N") respectively, "w_par" ("r_par") denotes the word consisting of the ordered concatenation of "w_par_1", ..., "w_par_N" ("r_par_1", ..., "r_par_N") parity words respectively, "w_data_U" ("r_data_U") and "w_data_L" ("w_data_L") denote the upper and lower half-word bits of the "w_data" ("r_data") word respectively, "w_par_U" ("r_par_U") and "w_par_L" ("r_par_L") denote the upper and lower half-word bits of the "w_par" ("r_par") word respectively, "ctrl_bus" denotes the control signals bus at the functional bus interface comprising clock, chip enable, write enable, data bit-write enable (to support the write bit masking), "ctrl_bus_1", ..., "ctrl_bus_N" denote the control signals busses corresponding to the write-bit mask 1, ..., N respectively at the functional bus-EDC encoder/decoder interfaces, "ctrl_mem_1", ..., "ctrl_mem_N" denote the control signals busses corresponding to the write-bit mask 1, ..., N respectively at the EDC encoder/decoder-memory bus interface, "ctrl_mem" is the bus consisting of the aggregaton of the signals of the busses "ctri_mem_1 ", ..., "ctrl_mem_N", "ctri_mem_LU" denotes the control signals bus for the lower half word bits "w_data_L" (or "r_data_L") and the upper half-word bits "w_par_U" (or "r_par_U") interfacing the SRAM1, "ctrl_mem_UL" denotes the control signals bus for the upper half word bits "w_data_U" (or "r_data_U") and the lower half-word bits "w_par_L" (or "r_par_L") interfacing the SRAM2, "addr" denotes the address signals bus.

When write-bit masking is used, the "ctrl_bus", "ctrl_bus_1", ..., "ctrl_bus_N" include the write-bit mask of the corresponding data bits, whereas "ctrl_mem_1", ..., "ctrl_mem_N", "ctrl_mem", "ctrl_mem_UL", and "ctrl_mem_LU" include the write-bit mask of both data and parity bits.

Figs. 1-3 show an architecture supporting data integrity protection against faults both end-to-end, across a functional data-bus and a memory (e.g., RAM) interface, and in the storage elements, i.e. the memory bit-cells.

In order to also protect data against faulty address decoder logic, the parity bits and the corresponding data bits are stored in different physical memory instances. Exemplarily, according to Fig. 3, the parity bits and the corresponding data bits are stored in two different physical memory instances.

In certain cases, a set of different data words is transported over the same bus and interfaced memory is accessed via bit masking. The IP supports this configuration by EDC/ECC encoding and decoding on a per bit mask basis. Data integrity protection and error checking is performed on a perbit mask basis, thus without the need to write and read complete set of data transported between the data bus and the memory (e.g., RAM). Note that the same bit mask used for writing shall be used for reading the data back from the memory.

All the data, parity bits and control_mems from the bit mask processing module 102 are gathered at the first multiplexer MUX1. In order to reduce the EDC/ECC protection storage overhead, data and parity bits are organized by the second multiplexer MUX2 in lower and upper half-words and stored in the two memory instances as shown in Figure 3 and described as follows.

The address signals are carried over the address bus denoted "addr." The control signals at the functional bus interface 101 are carried by the control bus "ctrl_bus" comprising clock, chip enable, write enable, and the bit-write enable signals corresponding to "data" (to support the write bit masking).

The ctrl_bus control signals are split at each EDC encoder/decoder -to the functional bus interface into ctrl_bus_1, ..., ctrl_bus_N including the same control signals as the control bus ctrl_bus excepted for the bit-write enable bit masking control signals, i.e., the k-th bus ctrl_bus_*k*: clock, chip-enable, write-enable, the bit-write enable signals corresponding to data_*k*, for *k*=1,..., N.

At the EDC encoder/decoder-to-memory interface the ctrl_bus_1, ..., ctrl_bus_N control signals are assigned to the ctrl_mem_1 ..., ctrl_mem_N busses respectively at each EDC encoder/decoder-memory interface. Each k-th bus ctrl_mem_k comprises the same control signals as the corresponding control bus ctrl_bus_k excepted for the bit-write enable bit masking control signals corresponding to the parity bits w_par_k, i.e.: clock, chip-enable, write-enable, the bit-write enable signals corresponding to data_*k* and par_*k*, for *k*=1,..., N.

At the first multiplexer MUX1, all the data_1, data _2, ..., data_N are gathered as data, all the par_1, par_2, ..., par_N are gathered as par, and all the ctrl_mem_1,..., ctrl_mem_N busses are gathered into a single bus as ctrl_mem.

Then, data and parity bits are organized by the second multiplexer MUX2 in lower and upper half-words and stored in the two memory instances.

The complete data comprises N words of W bits, where N is the number of bit masks.

A complete data word is split in upper and lower part as follows:
data_L = data[(NW-(NW mod 2))/2-1:0]
   and
data_U = data[NW-1: (NW-(NW mod 2))/2].
   Similarly, for the parity bits
par_L = par[(NP-(NP mod 2))/2-1:0]
   and
par_U = par[NP-1 : (NP-(NP mod 2))/2].

The notations (NW mod 2) and (NP mod 2) denote the reminders of the divisions of NW/2 and NP/2 respectively, and the prefixes "r_" and "w_"have been omitted for the sake of simplicity, but the above expressions can hold for both read and write data and parity bits. Further, the person skilled in the art can understand that the data and the parity bits can be divided into three or more portions respectively. To implement this, the above "mod 2" can be adapted to be "mod m", wherein m is the number of the portions to be divided into and can be the same as the number of the memory instances of the memory 104.

The bus ctrt_mem is split into ctrl_mem_LU and ctrl_mem_UL at the SRAM1 and SRAM2 memory interfaces, where ctrl_mem_LU comprises clock, chip-enable, write-enable, the bit-write enable signals corresponding to data_L and par_U respectively; and ctrl_mem_UL comprises clock, chip-enable, write-enable, the bit-write enable signals corresponding to data_U and par_L respectively.

When data are read from the memory the corresponding parity bits are read too and both are processed by the corresponding EDC decoder for error detection (and performing error correction if ECC is used instead).

The apparatus according to some embodiments of the present invention allows to detect errors occurring in the logic following the EDC encoding, the physical memory internal address decoding logic, as well as in the actual memory storage elements (memory bit-cells).

The number of detected errors and the number of corrected errors are signaled by the EDC (ECC) decoder via a suited interface that depends on the error control system.

In the particular embodiment of Fig. 3, the k-th EDC/ECC decoder signal the presence of a decoding error by asserting the err_k signal. The error signals err_1, ..., err_N are connected to an error-control module 102d. However, the present invention is not limited thereto, and the person skilled in the art can understand that different error signaling techniques can be used.

The architecture shown in Fig. 3 represents a particular embodiment with only two physical memory instances (SRAMs), two being the minimum number of instances required for the described architecture to properly work. In practice, each memory (denoted as SRAM 1 and SRAM2 in Fig. 3) may comprise more physical memory instances to meet specific hardware design constraints. The same architecture and interfaces can be used also in that case provided that the physical memories instances are properly "wrapped" to be seen as one of the two memory instances, SRAM1 and SRAM2, as shown in Fig. 3.

For the sake of simplicity, the description above refers to a particular embodiment where a specific type of volatile memory technology, denoted SRAM (synchronous-random-access-memory) is considered. However, the same approach can be readily applied and extended to other types of volatile and nonvolatile memories, e.g., registers, ROM's (read-only memories), SDRAMs, Flash memories etc.

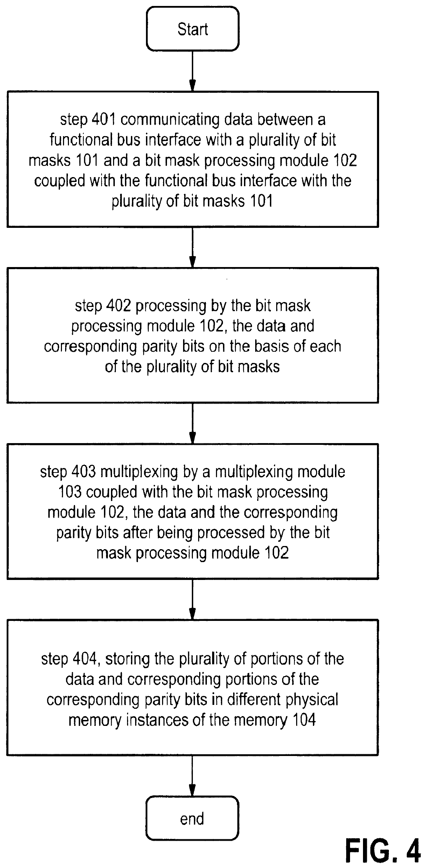

Fig. 4 is a flow diagram of a method 400 according to an embodiment of the present invention.

As shown by Fig. 4, the method comprises the following steps:
step 401, communicating data between a functional bus interface with a plurality of bit masks 101 and a bit mask processing module 102 coupled with the functional bus interface with the plurality of bit masks 101,
step 402, processing by the bit mask processing module 102, the data and corresponding parity bits on the basis of each of the plurality of bit masks,
step 403, multiplexing by a multiplexing module 103 coupled with the bit mask processing module 102, the data and the corresponding parity bits after being processed by the bit mask processing module 102, wherein each data is divided into a plurality of portions, and the corresponding parity bits are divided into portions corresponding to the plurality of portions of the data, and
step 404, storing the plurality of portions of the data and corresponding portions of the corresponding parity bits in different physical memory instances of the memory 104.

The bit mask processing module 102 may comprise a plurality of bit mask buses 102a coupled with the functional bus interface with a plurality of bit masks 101, a plurality of EDC codecs 102b coupled with the plurality of bit mask buses 102a respectively, and a plurality of bit mask memories (e.g., RAMs) 102c coupled between the plurality of EDC codecs 102b and the multiplexing module 103. The number of the plurality of bit mask buses 102a, the number of the plurality of EDC codecs 102b, and the number of the plurality of bit mask memories 102c may be the same and correspond to the number of the plurality of bit masks.

The bit mask processing module 102 may further comprise an error control module 102d coupled with each of the plurality of EDC codecs 102b. The method 400 may further comprises signaling by each of the plurality of EDC codecs 102b the presence of a decoding error by asserting an error signal, and transmitting by each of the plurality of EDC codecs 102b the error signal to the error control module 102d.

The multiplexing module 103 may comprise at least two multiplexers. The at least two multiplexers may comprise a first multiplexer 103a configured to multiplex the plurality of the data and the corresponding parity bits after being processed by the bit mask processing module 102, and a second multiplexer 103b configured to organize the plurality of the data and the corresponding parity bits after being multiplexed by the first multiplexer 103a as a plurality of groups each comprising a portion of each data and a portion of the parity bits corresponding to another portion of the data and storing the plurality of groups of data and parity bits in a plurality of memory instances respectively. Exemplarily, the second multiplexer 103b may be configured to organize the plurality of the data and the corresponding parity bits multiplexed by the first multiplexer 103a in lower and upper half-words and store the lower half words of the plurality of the data and the upper half words of the plurality of parity bits in a first memory instance 104a, and store the upper half words of the plurality of the data and the lower half words of the plurality of parity bits in a second memory instance 104b.

The multiplexing step 403 of the method 400 may further comprises multiplexing the plurality of the data and the corresponding parity bits after being processed by the bit mask processing module 102 by using the first multiplexer 103a, organizing by the second multiplexer 103b the plurality of the data and the corresponding parity bits after being multiplexed by the first multiplexer 103a as a plurality of groups each comprising a portion of each data and a portion of the parity bits corresponding to another portion of the data, and the storing step 404 of the method 400 may further comprises storing by the second multiplexer 103b the plurality of groups of data and parity bits in a plurality of memory instances respectively. Exemplarily, the method may further comprise organizing by the second multiplexer 103b the plurality of the data and the corresponding parity bits after being multiplexed by the first multiplexer 103a in lower and upper half-words, and storing the lower half words of the plurality of the data and the upper half words of the plurality of parity bits in a first memory instance 104a, and storing the upper half words of the plurality of the data and the lower half words of the plurality of parity bits in a second memory instance 104b.

The memory 104 comprises at least two physical memory instances coupled with the multiplexing module 103. The at least two physical memory instances may comprises the first memory instance 104a and the second memory instance 104b. Each physical memory instance may comprise a read/write data bus and control module, an address decoder and a memory array.

A data bus for communicating data and parity bits, an address bus for communicating address signals, a control bus for communicating control signals may be arranged between the modules 101-104, and may further be arranged between the submodules of the relevant modules, e.g., the plurality of bit mask buses 102a, the plurality of EDC codecs 102b and the plurality of bit mask memories 102c of the bit mask processing module 102; the first multiplexer 103a and the second multiplexer 103b of the multiplexing module 103.

Exemplarily, the method 400 may further comprise communicating data between the functional bus interface with a plurality of bit masks 101 and the bit mask processing module 102 via a data bus, transmitting address signals and control signals from the functional bus interface with a plurality of bit masks 101 to the bit mask processing module 102 via an address bus and a control bus respectively.

Exemplarily, the method 400 may further comprise communicating data between a bit mask bus 102a and the corresponding EDC codec 102b via a data bus, transmitting control signals from a bit mask bus 102a to the corresponding EDC codec 102b via a control bus. The method 400 further comprises communicating data and parity bits between an EDC codec 102b and the corresponding bit mask memory (e.g., RAM) 102c, and transmitting control signals from an EDC codec 102b to the corresponding bit mask memory 102c via a control bus. The method 400 may further comprise transmitting addresses from a bit mask bus 102a and the corresponding bit memory 102c via an address bus. The method 400 may further comprise communicating data and parity bits between the bit mask processing module 102 and the multiplexing module 103 via a data bus, transmitting address signals and control signals from the bit mask processing module 102 to the multiplexing module 103 via an address bus and a control bus respectively. The method 400 may further comprises communicating data and parity bits between the first multiplexer 103a and the second multiplexer 103b via a data bus, transmitting address signals and control signals from the first multiplexer 103a to the second multiplexer 103b via an address bus and a control bus respectively. The method 400 further comprises communicating data and parity bits between the multiplexing module 103 and the memory 104 via a data bus, transmitting address signals and control signals from the multiplexing module 103 to the memory 104 via an address bus and a control bus respectively.

The method according to some embodiments of the present invention allows to detect errors occurring in the logic following the EDC encoding, the physical memory internal address decoding logic, as well as in the actual memory storage elements (memory bit-cells).

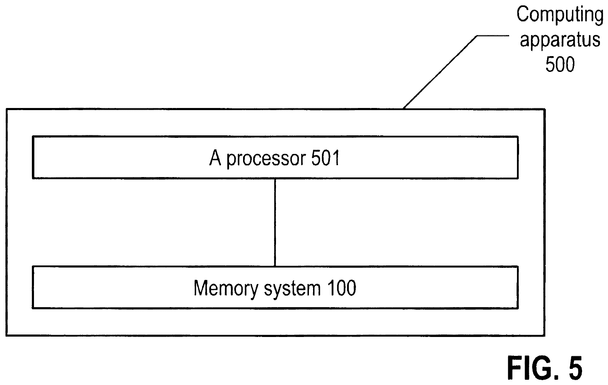

Fig. 5 shows a computing apparatus 500 comprising the memory system 100 according to some embodiments of the present invention.

As shown in Fig. 5, the computing apparatus 500 may comprise a processor 501, the memory system 100 according to Figs. 1 to 3, which is coupled with the processor 501. The computing apparatus 500 may further comprise a hard disk and/or Input/Output I/O devices as well as other components depending on the actual needs.

The computing apparatus 500 may be any electronic device that may use the memory system 100. For example, the computing apparatus 500 may be a Personal Computer (PC), a desktop computer, a mobile computer, a laptop computer, a notebook computer, a tablet computer, a server computer, a handheld computer, a handheld device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a Set-Top-Box (STB), a Blu-ray disc (BD) player, a BD recorder, a Digital Video Disc (DVD) player, a High Definition (HD) DVD player, a DVD recorder, a HD DVD recorder, a Personal Video Recorder (PVR), a broadcast HD receiver, a video source, an audio source, a video sink, an audio sink, a stereo tuner, a broadcast radio receiver, a flat panel display, a Personal Media Player (PMP), a digital video camera (DVC), a digital audio player, a speaker, an audio receiver, an audio amplifier, a gaming device, a data source, a data sink, a Digital Still camera (DSC), a wired or wireless network, a wireless area network, a Wireless Video Area Network (WVAN), a Local Area Network (LAN), a Wireless LAN (WLAN), a Wireless Metropolitan Area Network (WMAN) communication system, a Personal Area Network (PAN), a Wireless PAN (WPAN), devices and/or networks operating in accordance with existing IEEE 802.11 standards ("the 802.11 standards"), e.g., including IEEE 802.11 (IEEE 802.11-2007: Standard for Information technology - Telecommunications and information exchange between systems - Local and metropolitan area networks - Specific requirements, Part 11: Wireless LAN Medium Access Control (MAC) and Physical Layer (PHY) Specifications - June 2007), and/or future versions and/or derivatives thereof, devices, and/or networks operating in accordance with IEEE 802.16 standards ("the 802.16 standards"), e.g., including 802.16 (IEEE- Std 802.16, 2004 Edition, Air Interface for Fixed Broadband Wireless Access Systems), standards and/or future versions and/or derivatives thereof, devices, and/or networks operating in accordance with existing Wireless-Gigabit-Alliance (WGA) and/or WirelessHDTM specifications and/or future versions and/or derivatives thereof, devices and/or networks operating in accordance with existing cellular specifications and/or protocols, e.g., 3rd Generation Partnership Project (3GPP), 3GPP Long Term Evolution (LTE), and/or future versions and/or derivatives thereof, units and/or devices which are part of the above networks, one way and/or two-way radio communication systems, cellular radio-telephone communication systems, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MEVIO) transceiver or device, a device having one or more internal antennas and/or external antennas, Digital Video Broadcast (DVB) devices or systems, multistandard radio devices or systems, a wired or wireless handheld device (e.g., BlackBerry, Palm Treo), a Wireless Application Protocol (WAP) device, or the like. However, the present invention is not limited thereto.

## Claims

1. A memory system (100), comprising
a functional bus interface with a plurality of bit masks (101),
a bit mask processing module (102) coupled with the functional bus with the plurality of bit masks (101), configured to process data and corresponding parity bits on the basis of each of the plurality of bit masks,
a multiplexing module (103) coupled with the bit mask processing module (102), configured to multiplex the data and the corresponding parity bits after being processed by the bit mask processing module (102), and
a memory (104) comprising at least two physical memory instances coupled with the multiplexing module (103),
wherein the multiplexing module (103) is configured to multiplex the data and the corresponding parity bits after being processed by the bit mask processing module (102), by dividing each data into a plurality of portions, and dividing the corresponding parity bits into portions corresponding to the plurality of portions of the data, and storing the plurality of portions of the data and corresponding portions of the corresponding parity bits in different physical memory instances of the memory (104).

2. The memory system (100) of claim 1, wherein
the bit mask processing module (102) further comprises a plurality of bit mask buses (102a) coupled with the functional bus interface with a plurality of bit masks (101), a plurality of EDC codecs (102b) coupled with the plurality of bit mask buses (102a) respectively, and a plurality of bit mask memories (102c) coupled between the plurality of EDC codecs (102b) and the multiplexing module (103),
wherein the number of the plurality of bit mask buses (102a), the number of the plurality of EDC codecs (102b), and the number of the plurality of bit mask memories (102c) are the same and correspond to the number of the plurality of bit masks.

3. The memory system (100) of claim 1 or 2, wherein
the bit mask processing module (102) further comprises an error control module (102d) coupled with each of the plurality of EDC codecs (102b), wherein each of the plurality of EDC codecs (102b) is configured to signal the presence of a decoding error by asserting an error signal and transmit the error signals to the error control module (102d).

4. The memory system (100) of any of claims 1 to 3, wherein
the multiplexing module (103) further comprises at least two multiplexers, the at least two multiplexers comprise a first multiplexer (103a) configured to multiplex the plurality of the data and the corresponding parity bits after being processed by the bit mask processing module (102), and a second multiplexer (103b) configured to organize the plurality of the data and the corresponding parity bits after being multiplexed by the first multiplexer 103a as a plurality of groups each comprising a portion of each data and a portion of the parity bits corresponding to another portion of the data and store the plurality of groups of data and parity bits in a plurality of memory instances respectively.

5. The memory system (100) of claim 4, wherein
the second multiplexer (103b) is further configured to organize the plurality of the data and the corresponding parity bits multiplexed by the first multiplexer (103a) in lower and upper half-words, and store the lower half words of the plurality of the data and the upper half words of the plurality of parity bits in a first memory instance (104a), and store the upper half words of the plurality of the data and the lower half words of the plurality of parity bits in a second memory instance (104b).

6. The memory system (100) of claim 5, wherein
a complete data word is split in an upper and a lower part as follows:
data_L = data[(NW-(NW mod 2))/2-1:0]
and
data_U = data[NW-1: (NW-(NW mod 2))/2]; and
for the parity bits
par_L = par[(NP-(NP mod 2))/2-1:0]
and
par_U = par[NP-1 : (NP-(NP mod 2))/2],
wherein the notations (NW mod 2) and (NP mod 2) denote the reminders of the divisions of NW/2 and NP/2 respectively.

7. The memory system (100) of any of claims 1 to 6, wherein
each physical memory instance comprises a read/write data bus, a control module, an address decoder and a memory array.

8. A method (400) comprising the following steps:
communicating (401) data between a functional bus interface with a plurality of bit masks (101) and a bit mask processing module (102) coupled with the functional bus interface with the plurality of bit masks (101),
processing (402) by the bit mask processing module (102), the data and corresponding parity bits on the basis of each of the plurality of bit masks, multiplexing (403) by a multiplexing module (103) coupled with the bit mask processing module (102), the data and the corresponding parity bits after being processed by the bit mask processing module (102), wherein each data is divided into a plurality of portions, and the corresponding parity bits are divided into portions corresponding to the plurality of portions of the data, and
storing (404) the plurality of portions of the data and corresponding portions of the corresponding parity bits in different physical memory instances of the memory (104).

9. The method (400) of claim 8, wherein the method further comprises signaling by each of plurality of EDC codecs (102b) comprised in the bit mask processing module (102) presence of a decoding error by asserting an error signal, and transmitting by each of the plurality of EDC codecs (102b) the error signal to a error control module (102d) comprised in the bit mask processing module (102).

10. The method (400) of claim 8 or 9, wherein the multiplexing step (403) further comprises multiplexing the plurality of the data and the corresponding parity bits after being processed by the bit mask processing module (102) by using a first multiplexer (103a) comprised in the multiplexing module (103), organizing by a second multiplexer (103b) comprised in the multiplexing module (103) the plurality of the data and the corresponding parity bits after being multiplexed by the first multiplexer (103a) as a plurality of groups each comprising a portion of each data and a portion of the parity bits corresponding to another portion of the data, and the storing step (404) further comprises storing by the second multiplexer (103b) the plurality of groups of data and parity bits in a plurality of memory instances respectively.

11. The method (400) of claim 10, the method further comprises organizing by the second multiplexer (103b) the plurality of the data and the corresponding parity bits after being multiplexed by the first multiplexer (103a) in lower and upper half-words, and storing the lower half words of the plurality of the data and the upper half words of the plurality of parity bits in a first memory instance (104a) of the memory (104), and storing the upper half words of the plurality of the data and the lower half words of the plurality of parity bits in a second memory instance (104b) of the memory (104).

12. The method (400) of claim 11, wherein
the method further comprises splitting a complete data word in an upper and a lower part as follows:
data_L = data[(NW-(NW mod 2))/2-1:0]
and
data_U = data[NW-1: (NW-(NW mod 2))/2]; and
for the parity bits
par_L = par[(NP-(NP mod 2))/2-1:0]
and
par_U = par[NP-1 : (NP-(NP mod 2))/2],
wherein the notations (NW mod 2) and (NP mod 2) denote the reminders of the divisions of NW/2 and NP/2 respectively.

13. A computing apparatus (500), comprising:
a processor (501); and
the memory system (100) according to any one of claims 1 to 7, coupled with the processor (501).

14. The computing apparatus (500) of claim 13, wherein the computing apparatus (500) further comprises a hard disk and/or Input/Output I/O devices.

15. The computing apparatus (500) of claim 13 or 14, wherein the computing apparatus (500) is selected from a group comprising a Personal Computer PC, a desktop computer, a mobile computer, a laptop computer, a notebook computer, a tablet computer, a server computer, a handheld computer, a handheld device, a Personal Digital Assistant PDA device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point AP, a wired or wireless router, a wired or wireless modem, a video device, an audio device, an audio-video AN device, a Set-Top-Box STB, a Blu-ray disc BD player, a BD recorder, a Digital Video Disc DVD player, a High Definition HD DVD player, a DVD recorder, a HD DVD recorder, a Personal Video Recorder PVR, a broadcast HD receiver, a video source, an audio source, a video sink, an audio sink, a stereo tuner, a broadcast radio receiver, a flat panel display, a Personal Media Player PMP, a digital video camera DVC, a digital audio player, a speaker, an audio receiver, an audio amplifier, a gaming device, a data source, a data sink, a Digital Still camera DSC, a wired or wireless network, a wireless area network, a Wireless Video Area Network WVAN, a Local Area Network LAN, a Wireless LAN WLAN, a Wireless Metropolitan Area Network WMAN communication system, a Personal Area Network PAN, a Wireless PAN WPAN.
